# EUROPEAN PATENT SPECIFICATION

(11) **EP 4 278 283 B1**
(45) Date of publication and mention of the grant of the patent: **23.07.2025**
(21) Application number: 22710506.1
(22) Date of filing: 16.02.2022
(51) Int. Cl.: G06F 21/34, G06F 21/32, H04L 9/40

(54) **AUTHENTICATION MECHANISM**
AUTHENTIFIZIERUNGSMECHANISMUS
MÉCANISME D'AUTHENTIFICATION

(30) Priority: 05.03.2021 GB 202103129
(43) Date of publication of application: 22.11.2023
(73) Proprietor: British Telecommunications public limited company, London E1 8EE (GB)
(72) Inventor: SMITH-CREASEY, Max, London E1 8EE (GB); EL-MOUSSA, Fadi, London E1 8EE (GB)
(74) Representative: British Telecommunications public limited company Intellectual Property Department
(86) International application number: PCT/EP2022/053822
(87) International publication number: WO 2022/184441

(56) References cited:
- WO-A1-2015/100210
- US-A1- 2015 278 498

## Description

### Technical Field

Embodiments of the present disclosure described herein relate to an authentication process, and in particular a process in which a user is authenticated whilst using a device in dependence on authentication data generated previously by a different device.

### Background

A user may have multiple devices, and want each of these to be authenticated whilst in use. Generally, each user device performs its own authentication process, which involve each device separately authenticating the user using one or more sensors. Previous disclosures relating to multi-device authentication relate to one device authenticating another purely based on a connection between the devices.

For example, US 9,648,778 discloses the extension of authentication across a group of smart devices. A wearable electronic device includes a biometric sensor and logic system. A biometric input may be authenticated by the logic system of the electronic device. Where the logic system determines that another smart device is located in a "trust group" with the wearable device, upon successful authentication of the biometric input, the logic may unlock the smart device. This authentication of the second device is based solely on a connection between the devices, which may create security issues.

US 2016/0127900 A1 discloses the distribution of a biometric authentication value between a primary device and a secondary device, with the secondary device then performing pre-selected additional authentication of the same user using a relatively low reliability biometric sensor.

US 2018/0046789 performs a biometric identity verification using a determination of location feasibility. A user attempts to log into a device using biometric authentication data. The location of the log in attempt is recorded and compared with the location of an earlier biometric authentication attempt. The system compares the feasibility of movement between these locations in the elapsed time.

WO2015100210 A1 discloses a wearable electronic device with a biometric sensor and logic. At least a portion of the logic is implemented in hardware. The logic is configured to receive input data indicative of biometric input and attempt to authenticate the input data based, at least in part, on at least one biometric credential of an authorized user. The logic is configured to establish a wireless connection to a smart device, determine whether the smart device is included in a trust group of one or more smart devices, and send a communication to unlock the smart device when the input data is successfully authenticated and when the trust group includes the smart device.'

US2015278498A1 discloses a mobile terminal including a mobile terminal body, a wireless communication unit configured to receive an information input request for user authentication from an external server connected to the body, and a controller configured to transmit a wireless signal for sensing the wearing of a second mobile terminal formed to be paired with the body and wearable on a specific portion of a human body to the second mobile terminal in response to the request, wherein the controller performs wearer authentication for the second mobile terminal in response to receiving at least one of a response signal to the wireless signal from the second mobile terminal and a wearer's biometric signal sensed through the second mobile terminal, and controls the authentication method of the user authentication or processing for an information input corresponding to the authentication method to be determined in a different manner based on at least one of the execution result of the wearer authentication and the analysis result of the received biometric signal.

The present disclosure seeks to provide an improved system to authenticate a user across multiple devices.

### Summary

Embodiments of the present disclosure provide an improved method for the authentication of a user across multiple devices. The method bases an authentication process of a second device on the previous authentication process relating to a first device. Each device is configured to obtain a variety of authentication readings on which to base their authentication process. The authentication readings selected for the authentication process of the second device are selected in dependence on the authentication readings obtained and authenticated by the first device. Beneficially, this may enable the authentication process undertaken by the second device when authenticating a user to be dynamically varied based on the authentication readings previously taken by the first device when it was authenticating the user. For example, here a large and varied number of authentication readings were recently taken by the first device, the second device may select to perform a relatively modest number of authentication readings. Where a limited number of authentication readings have been taken by the first device (for example because it is only capable of a limited number/variety of readings), the second device may select to perform a larger number/variety of authentication readings. As a result, the authentication process of the second device may be more efficient, for example reducing re-performing certain authentication readings by the second device, whilst still maintaining a high degree of security.

Where a trust has been developed in a user's use of a first device, this may be provided to the user's use of the second device. However, the trust in the second device is not necessarily based solely on a connection with the first device, and the system provides a flexible process in which authentication readings are selected dynamically. The authentication readings may be selected continuously based on a variety of factors, not simply due to a reading having been obtained by a different device.

The invention is defined by the appended claims.

### Brief Description of the Drawings

Embodiments of the disclosure will now be described by way of example only and with reference to the accompanying drawings, wherein like reference numerals refer to like parts, and wherein:
Figure 1 is a system diagram according to an example aspect of the disclosure;
Figure 2 is an overview of a method of authentication according to an example aspect of the disclosure;
Figure 3 is a system diagram showing the transfer of data between devices according to an example aspect of the disclosure;
Figure 4 is an overview of an authentication process of a first device according to an example aspect of the disclosure;
Figure 5 is an overview of a process that takes place on a network device according to an example aspect of the disclosure;
Figure 6 is an overview of an authentication process of a second device according to an example aspect of the disclosure;
Figure 7 is an overview of the selection of authentication readings according to an example aspect of the disclosure; and
Figure 8 is a diagram of an electronic device according to an example aspect of the disclosure.

### Detailed Description

A user may have multiple devices, and want each of these to be authenticated whilst in use. Previously, each user device typically performs their own authentication process, which involves each device authenticating the user using one or more sensors or mechanisms. Authentication may take time, because obtaining the necessary authentication readings for such authentication may require the collection of a "window" of authentication readings. Further, some devices may be limited in the authentication procedures they can perform, due to available hardware and their processing capabilities.

Aspects of the disclosure relate to a system that allows the sharing of authentication data between a first device and a second device. Prior disclosures often take this concept to be a simplistic authentication of a user of a second device due to the fact that a first device has previously authenticated the user. However, this may lead to security issues. Simply being connected to a device does not indicate that an approved user is using the device. In the present disclosure, when authenticating a user a device selects which authentication readings it will perform based at least on authentication readings that have previously been authenticated by another device used by the user. Beneficially, this prevents the complete re-reading and re-authentication of authentication readings that have already been authenticated by another device. Further, the system is flexible such that where different devices have different capabilities in terms of obtaining authentication readings, such that if the first device has performed extensive authentication, the second device can choose to perform relatively limited authentication, but if the first device has performed limited authentication, the second device can choose to perform more extensive authentication. Furthermore, the authentication process performed by the second device may rely on authentication readings gathered by a previous device that the second device is not capable of obtaining.

The authentication process may be based on an array of considerations, for example one or more of: the proximity between the devices, the proximity of a user to the device, the location of the devices, a time elapsed since an earlier authentication process took place, and/or the reliability of a particular authentication reading, among others.

This process brings further benefits to the field of continuous authentication. In continuous authentication, authentication readings are continuously collected for the purpose of ensuring that the user is who they claim to be. Prior to the advent of continuous authentication, authentication of a user using a device has generally involved a single authentication process, after which the user remains authenticated. The user is normally granted access to use the device until they choose to log-out, or are timed-out. In continuous authentication, the probability that the user is who they claim to be is evaluated on an ongoing basis throughout an entire period of use, allowing access to be revoked rapidly if the authenticated user stops using the device or has it taken from them. Where a previous continuous authentication process has taken place on a different device, a separate device may consider the previous authentication process as part of its own continuous authentication process. The continuous authentication may therefore exist across multiple devices. This may reduce the time taken to collect a sufficient number of authentication readings to verify the user.

Aspects of this disclosure relate to improvements to the authentication process performed by a device, improving the security of the authentication process, reducing the time taken to achieve an initial authentication of a user, and reducing power consumption associated with performing authentication processes.

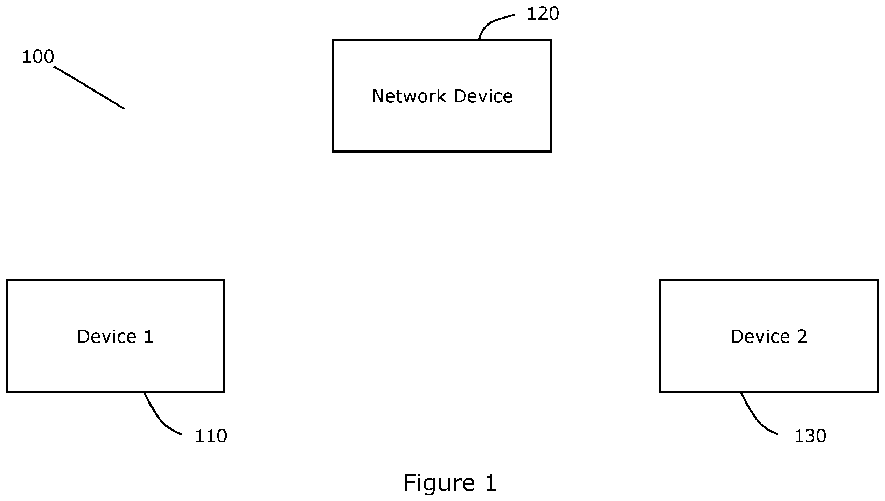

Figure 1 shows a system 100 comprising three devices: a first device 110, a second device 130 and a network or routing device 120. The first device 110 and the second device 130 are devices that are used by a user where authentication of the user is desired or required. The devices 110, 130 may be the same type of device, or different types of device. They may be any type of electronic device that the user may use and require authentication on, for example a mobile phone, smart phone, tablet computer, laptop computer, desktop computer, wearable device such as smartwatch or smart glasses, etc. Both devices have the ability to obtain authentication readings relating to the user. The network device 120 may be any type of network device, for example, a smart home device, or a network router/hub/node. Whilst a single network device 120 is represented, it will be appreciated there may be two or more network devices (such as mesh network nodes or smart home network devices), all operating on the same network. Therefore, the first device 110 and second device 130 may both communicate with the same network device, or different network devices that are all operating on the same network.

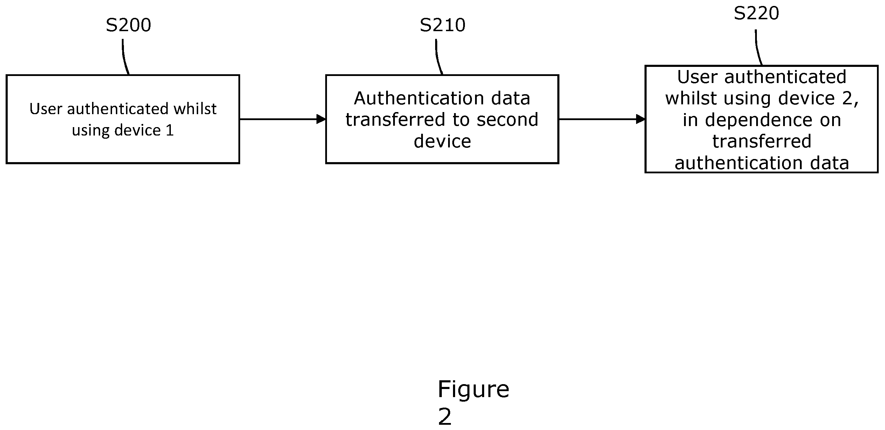

Figure 2 shows a flow diagram relating to the authentication of a user and to the transfer of authentication data.

In step S200, a user may be authenticated whilst using the first device 110. This first authentication process may comprise a continuous authentication process. The first authentication process is based on authentication readings (for example, biometric readings) obtained by the first device 110.

In step S210, authentication data related to the first authentication process is transferred to the second device 130. The authentication data may comprise any form of data that is based/dependent on one or more of the authentication readings taken by the first device 110. For example, it may comprise one or more of: some or all of the authentication readings taken by the first device 110; one or more results of the first authentication process (such as whether each type of authentication reading has passed or failed authentication and/or a level of confidence in each authentication reading/outcome); and/or a trust score determined by the first device 110 (explained further below). In addition, it may optionally also comprise one or more of: a time(s) when the authentication readings were taken by the first device 110; data indicative of a location of the first device 110, such as GPS data or identification of a sub-network the first device 110 is using, etc. This transfer may occur when the user stops using the first device 110 and begins using the second device 130. This creates a need to authenticate the user and their use of the second device.

In step S220, the user may be authenticated whilst using the second device 130. This second authentication process is dependent on the authentication data generated by first device 110 when performing the first authentication process.

An example of a situation in which this process may occur, is where a user is using a laptop (device one) and then picks up, and begins using, their phone (device two). There may be a need for the user to be quickly and efficiently authenticated to use their phone. This is possible through the dependence of the second authentication process on the first authentication data produced during the first authentication process.

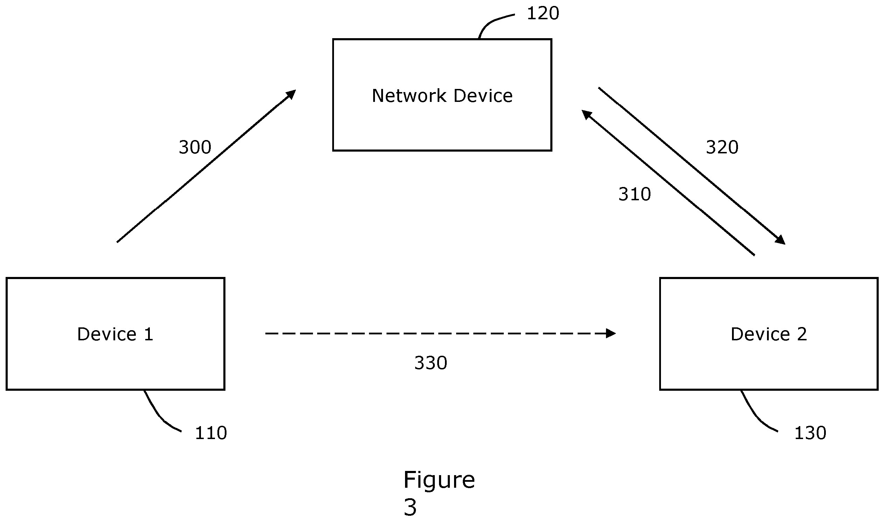

Figure 3 is a system diagram showing the transfer of data between the first device 110 and the second device 130 via the network device 120. In one example, when a user stops using the first device 110, first authentication data is transferred 300 from the first device 110 to the network device 120. Alternatively, the first authentication data may be transferred whilst the user is using the first device 110, such as continuously, periodically or intermittently, or it may be transferred on request by the network device 120, such as when the network device 120 receives a request from the second device 130 for authentication data.

When a user begins using the second device 130, the second device may send a message 310 to the network device, requesting authentication data and notifying the network device 120 that the second device 130 is in use. The network device 120 then transfers 320 second authentication data to the second device 130 in response to the request. Alternatively, the network device 120 may detect that the second device 130 is being used by the user (for example, by virtue of a login to the network, etc) and push the second authentication data to the second device 130 without request. Since the network device 120 manages transfer of authentication data/trust from the first device 110 to the second device 130, the authentication process on the second device 130 can benefit from this transfer even if the first device 110 is unable to communicate with it directly, e.g. if the first device 110 has been shut down. The network device 120 may also perform some processing of the authentication data received from the first device 110, reducing the associated burden on the first and/or second devices 110, 130.

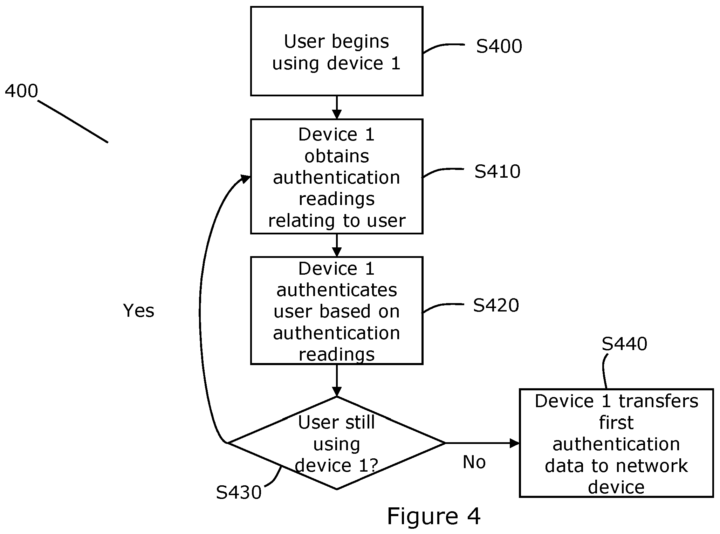

Figures 4 to 6 show more detailed examples of the steps S200, S210 and S220 of figure 2, respectively.

Figure 4 represents a first authentication process 400 in respect of the user's use of the first device 110.

In step S400, the user begins using the first device 110.

In step S410, the first device 110 obtains one or more authentication readings relating to the user. Authentication readings may, for example, be biometric readings or other forms of reading that allow authentication of the user.

In step S420, the first device 110 performs the first authentication process in order to authenticate the user based on the authentication readings obtained in step S410.

Step S430 is a decision step. Having authenticated the user based on an authentication reading, if the user is still using the first device 110, the first device 110 may continuously authenticate the user based on further authentication readings, of either the same or different type as the previously obtained authentication readings. A continuous authentication process allows the user's identity to be continuously verified.

If the user has stopped using the first device 110, first authentication data may be sent to the network device 120 in step S440. The first authentication data includes data relating to the first authentication process. For example, as explained earlier it may comprise one or more of: some or all of the authentication readings taken by the first device 110; one or more results of the first authentication process (such as whether each type of authentication reading has passed or failed authentication and/or a level of confidence in each authentication reading/outcome); and/or a level of trust in the user (explained further below). In addition, it may optionally also comprise one or more of: a time(s) when the authentication readings were taken by the first device 110; data indicative of a location of the first device 110, such as GPS data or identification of a sub-network the first device 110 is using, etc.

For the sake of brevity and clarity, authentication data is shown as being sent to the network device 120 during a single event S440 when the user has stopped using the device, but this is not necessarily the case. In an alternative the first authentication data may be sent continuously, or periodically, or intermittently as new authentication readings are obtained by the first device 110. In a further optional implementation the first authentication process itself may not be generated on the first device 110, but instead the authentication readings may be transferred to the network device 120, and the authentication of these readings may take place on the network device 120 with results returned to the first device 110.

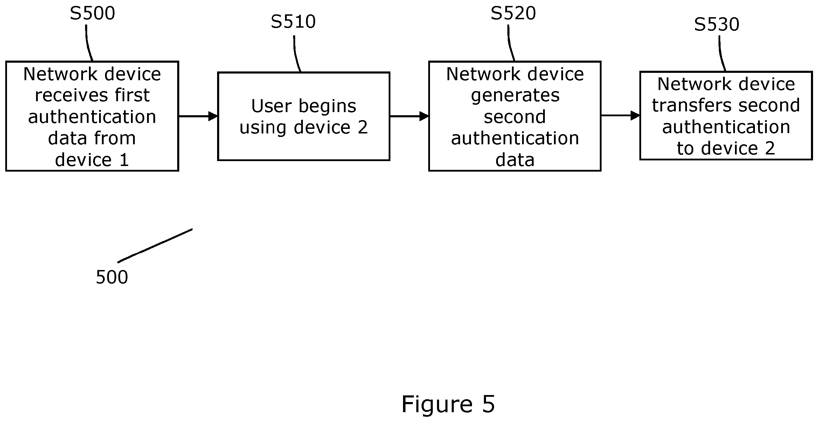

Figure 5 shows an example operation 500 of a network device 120 in accordance with an aspect of this disclosure.

In step S500, the network device 120 receives the first authentication data from the first device 110.

In step S510, the user begins to use the second device 130. The second device 130 may also be owned by the same user. The network device 120 may be notified by the second device 130 that the user has begun to use the second device 130 through a software client installed on the second device 130, or it may simply become aware of it by virtue of the second device 130 operating on the network (for example, as a result of the user logging into the network).

In step S520, the network device 120 generates second authentication data based on the first authentication data. In one example, the second authentication data may comprise some or all of the first authentication data (in which case the network device 120 may in effect operate to forward authentication data from the first device 110 to the second device 130). In another example, the second data may comprise one or more results generated by the network device 120 based on the first authentication data, such information relating to the first authentication readings obtained and authenticated by the first device 110 and/or a trust level in the user.

The trust level may be based on the first authentication readings obtained by the first device 110 and calculated by either the first device 110 (as mentioned earlier) or the network device 120. The trust level may be indicative of the degree to which the authentication readings authenticate the user. In one example, it may comprise the probability or percentage that a user has been authenticated. For example, a trust level of 1 may indicate that the system believes there is a 100% likelihood that the user is who they claim to be, based on authentication readings taken and the authentication process performed. In contrast, a trust level of 0 may indicate that the system believes there is no chance that the user is who they claim to be. The trust level may be used by the user devices 110, 130 and/or the network device 120 for access control, with differing trust levels allowing different levels of access. For example, some tasks that the user wishes to perform may require a greater trust level than others.

Trust may be based on obtained authentication readings. A first authentication reading (for example, a facial scan) and the subsequent authentication process may generate a 70% trust level in the user. Another authentication reading of a different type that has been subsequently obtained (for example, a fingerprint reading) and the subsequent authentication process may generate a 90% trust level in the user. In this situation, an average trust level may be calculated (in one straightforward, non-limiting example, (70+90)/2 = 80% trust). The average may be a weighted average, based on one or more of numerous criteria, such as the accuracy of a particular authentication reading, and/or the time that has elapsed since the authentication reading was obtained.

The trust level achieved by readings obtained by the first device 110 may not be entirely useful for establishing trust at the second device 130, and as such it may be beneficial to transfer only a portion of this trust to the same user's use of the second device 130. For example, if the same level of trust was provided to the second device 130 as to the first device 110, security issues may arise. In view of this if the first authentication data included a trust level determined by the first device 110, the network device 120 may calculate a degraded trust level for inclusion in the second authentication data. If the network device 120 is determining the trust level for itself based on other data in the first authentication data, it may be configured to determine a degraded level of trust compared with what would be arrived at from the first authentication readings alone. The trust level may be degraded based on:
- The location of the second device 130 - for example, if the second device 130 is located in an area where the device is commonly used, there may be a greater likelihood that the authorised user is using the device. In this situation, the trust level may be degraded less compared with if the second device is being used in an unknown area. The network device 120 may know the location of the first device 110 from information included in the first authentication data and/or because of the sub-network on which the first device 110 is operating.
- Proximity between the second device 130 and the network device 120; and/or proximity between the first device 110 and the network device 120; and/or proximity between the first device 110 and the second device 130. The network device 120 may be aware of one or more of these proximities by virtue of a sensed proximity between the network device 120 and the first device 110 and/or second device 130 (for example because they are communicating using a distance limited communications technology such as Bluetooth (RTM) or NFC), and/or by virtue of location data included in the first authentication data and/or included in communication 310 described above and/or knowledge of its own location, etc. Typically, the closer the second device 130 is to the first device 110, the greater the likelihood that the user who used the first device 110 is using the second device 130 and the less the level of trust may be degraded. The greater the distance between the first device 110 and the second device 130, or between the second device 130 and the network device 120, or between the first device 110 and the network device 120, the lower the likelihood that the user who used the first device 110 is using the second device 130 and the more the trust level may be degraded.
- The time that has elapsed since the user was last authenticated on the first device 110 - the greater the time that has elapsed, the greater the level of trust may be degraded. The network device 120 may know the elapsed time from information included in the first authentication data and/or a time it received the first authentication data, etc.

In step S540, the network device 120 transfers the second authentication data to the second device 130.

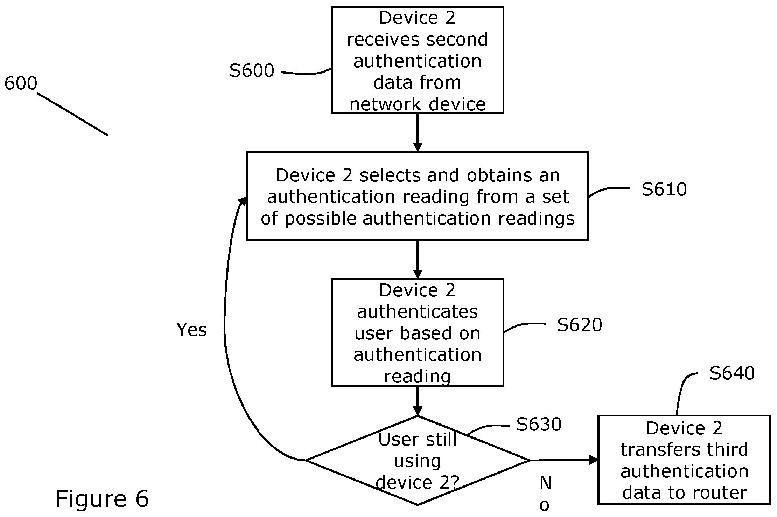

Figure 6 represents a second authentication process in respect of the user's use of the second device 130, based on the received second authentication data.

In step S600, the second device 130 receives the second authentication data from the network device 120.

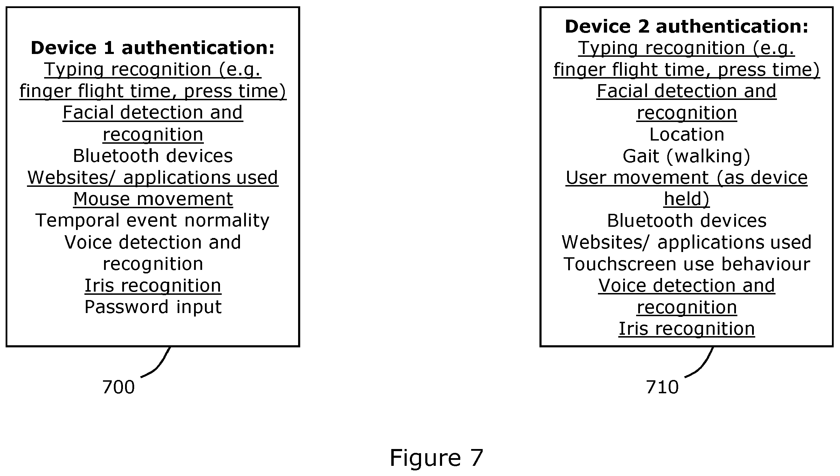

In step S610, the second device 130 selects one or more authentication readings to perform ("second authentication readings") from a set of different types of authentication readings that the second device 130 is able to obtain, in dependence on the second authentication data received from the network device 120. Further details of how the authentication readings may be selected are described with relation to Figure 7.

In step S620, the second device 130 authenticates the user based on the second authentication readings it obtains. The trust level it achieves based on the obtained second authentication readings may be affected also by at least part of the second authentication data. For example, where the second authentication data includes a trust level, it may be combined with the trust level determined using the second authentication readings, so as to provide a continuously authenticated/ updated trust level. By doing so, the second device 130 may be able to appropriately weight the extent to which it will utilise the authentication previously performed by the first device 110 when establishing trust in the user that is using the second device 130.

Step S630 shows a decision step. Where the process is a continuous authentication process, and the user is still using the second device 130, the process returns to step S610, and further authentication readings may be obtained, of either the same or different type as the previously obtained readings, and then authenticated in step S620. Optionally, when the user stops using the second device 130, authentication data may be sent to the network device 120. The process may then be repeated when the user begins to use a new device (for example, a third device) or begins using the first device again. As previously explained, in an alternative authentication data may be sent continuously, periodically or intermittently from the second device 130 to the network device 120, rather than at a single time when the user stops using the second device 120.

Whilst in the above explanation the second device 130 receives second authentication data from the network device 110 and bases its selection of authentication readings to obtain on the second authentication data, in an alternative the first and second devices 110, 130 may directly communicate. In this case, the first device 110 may communicate the first authentication data to the second device 130, for example in response to a request issued by the second device 130 when the user starts using the second device 130. In this case, the second device 130 would select the one or more authentication readings it will obtain in dependence on at least part of the first authentication data.

In both example implementations, the first authentication data and the second authentication data are both based on, and therefore dependent on, the authentication readings obtained by the first device 110. Therefore, the selection performed by the second device 110 is in both implementations dependent on the authentication readings obtained by the first device 110.

Figure 7 shows two example, non-limiting lists of the authentication capabilities of example devices. The first list 700 relates to the authentication readings that the first device 110 is capable of obtaining. The second list 710 relates to the authentication readings that the second device 130 is capable of obtaining. Different devices may be capable of obtaining different authentication readings, due to different hardware and/or software constraints. For example, a number of non-exhaustive, non-limiting potential authentication readings are outlined below:
- Typing recognition: a record of a user's typing style may be built up, allowing comparison of a user's current typing style with the historic typing style of the user. This may include analysis of finger flight time or key press time;
- Facial detection;
- Fingerprint scans;
- Bluetooth (RTM) devices: readings of currently connected Bluetooth (RTM) devices may be taken, and compared to historically connected Bluetooth (RTM) devices;
- Websites/ applications used: readings of the websites currently in use by the user may be compared to historical website usage;
- Mouse movement: readings relating to the movement of a mouse may be compared to historical mouse movement patterns;
- Temporal event normality;
- Voice detection and recognition;
- Iris recognition;
- User movement recognition.

For example, in a situation where the first device 110 is a laptop, and the second device 130 is a mobile phone, the laptop may be able to obtain authentication reading based on the user's movement of a mouse, and compare this to historical usage. This may not be possible for the mobile phone, which may instead be capable of obtaining authentication readings relating to the use of a touchscreen.

When the second authentication process is performed by the second device 130, authentication readings are selected in dependence on the authentication readings that have been obtained and authenticated by the first device 110.

For example, in Figure 7, the underlined authentication readings are those that have been, or will be, obtained and authenticated by that device. Those not underlined are those that are not authenticated or obtained by that device.

The first device 110 may obtain as many authentication readings, of as many different types, as necessary to authenticate the user to a required trust level. This may not necessarily include all different types of authentication readings that the first device 110 is configured to be able to perform. Where the process is continuous, the same authentication reading may be obtained and authenticated multiple times.

As outlined in relation to Figure 6, the second device 130 authenticates the user in a second authentication process in dependence on authentication data relating to the first authentication process of the first device 110. Authentication readings of the type that have already been obtained and authenticated during the first authentication process may not need to be obtained during the second authentication process, at least initially. The second device 130 may select the authentication readings based on the received authentication data. The authentication data may either include data that allows the second device 130 to select the authentication readings it will perform, or the network device 120 may determine the types of authentication readings that the second device 130 is to perform and include instructions in the second authentication data indicating the types of reading that the second device 130 is to obtain.

The authentication readings may further be selected by the second device 130 in dependence on:
- a proximity between the first device 110 and the second device 130;
- a proximity between the user and the second device 130;
- a location of the first device 110 and/or a location of the second device 130;
- a time elapsed since the one or more authentication readings were obtained by the first device 110;
- an accuracy of each authentication reading obtained by the first device 110.

The second device 130 may determine one or more of these factors using information included in the second authentication data. Additionally or alternatively, it may be able to sense the proximity of the first device 110, for example by Bluetooth (RTM), WiFi or NFC communication.

Biometric readings, a form of authentication reading, are characteristics of the human body, and may be divided into two categories:
- Physiological - the characteristics unique to the physiology (bodily aspects) of the human body. These are often highly accurate as they focus on biometrics such as the face which is static and rich with unique features.
- Behavioural - common traits unique to a user's behaviour. Behavioural readings are at greater risk of volatility, and thus accuracy, due to behavioural shifts.

During a continuous authentication process performed by the first user device 110 and/or second user device 130, biometric authentication readings may be obtained from one or both categories. The accuracy of physiological readings may be greater than that of behavioural readings. Therefore, the second device 130 may take into account the accuracy of the readings performed by the first device 110 when selecting new readings to obtain. Further, when calculating a trust score in the user, the accuracy of each reading may be evaluated.

Selecting authentication readings to be obtained by the second device 130 based on the authentication readings obtained by the first device 110, and therefore basing the second authentication process on the authentication readings obtained by the first device 110, may offer numerous benefits, for example:
- The process may reduce initial authentication reading gathering time for the second device 130. Where trust is transferred, the second device 130 may be authenticated straight away to a certain level.
- Where the second device 130 offers different authentication reading capabilities compared to the first device 110, authentication of the user at the second device 130 may be based in part using readings obtained by the first device 110 that the second device 130 cannot obtain itself. This increases the number of types of authentication readings available to the second device 130.
- Preventing the need for re-authentication of authentication readings that have recently been authenticated by a different device. This may lead to conservation of power by reducing the need to obtain and authenticate some readings.
- Allowing the second device 130 to initially base its authentication process on different authentication readings than those authenticated by the first device may increase system security, as the user will be verified by a greater range of authentication readings in a shorter amount of time.

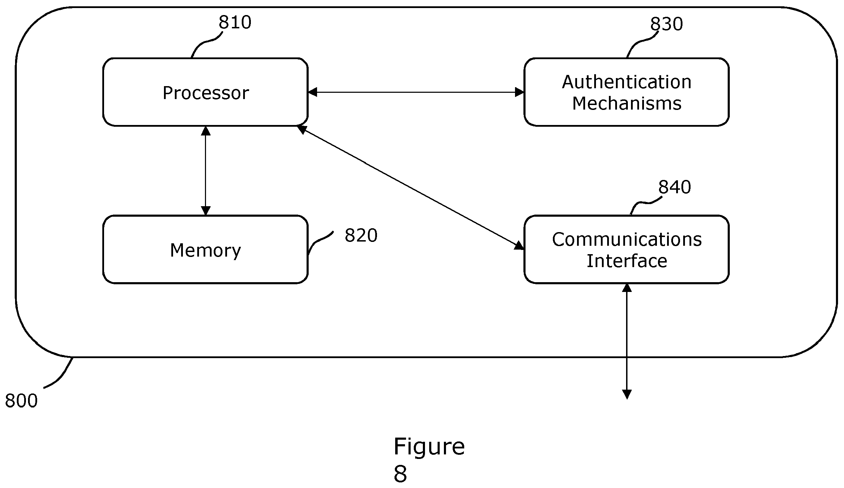

Figure 8 shows a diagram of a device 800 that may be used as the first device 110 and/or the second device 130. The device 800 comprises at least one processor 810 (such as a microprocessor(s)), memory 820 (such as volatile or non-volatile memory, for example RAM, ROM, flash, SSD, a hard disk drive, etc.), authentication mechanisms 830 and a communications interface 840. The memory 820 may comprise software configured to cause, when executed on the one or more processors 810, the device 800 to perform the processes described above

Authentication mechanisms 830 may include hardware means to obtain authentication readings for the authentication process. For example, they may include one or more of a fingerprint scanner, a camera, a ToF camera, a LIDAR system, a keyboard/touchscreen, etc. The authentication mechanisms need not be dedicated hardware, but instead may also be used for other purposes during the device's operation. For example, a smartwatch may include an accelerometer to measure movement for fitness tracking activities. This accelerometer may be used as an authentication mechanism by comparing movement to historical records. Where a camera is included in a phone to allow the taking of photographs, it may also be used to provide facial recognition.

The communications interface 840 allows communications, such as the transferring of authentication data, between the first device 110, the second device 130 and/or the network device 120. The communication interface 840 may be configured to enable communications according to any one or more suitable communications protocol/architectures, including Wi-Fi (RTM), Bluetooth (RTM), NFC, mobile data communications such as GSM, UMTS, LTE, 5G, etc.

The first device 110 and the second device 130 described here may have a software client installed thereon, for example within memory 820. The software client may instruct the collection of authentication readings and perform an authentication process to authenticate the device. The software client may have machine learning capabilities implemented via an artificial neural network to classify the authentication readings collected. The software client may be controlled by a third party, for example an Internet Service Provider (ISP) through the network device 120 or other means.

The software client may also alert the network device 120 as to whether an active session is taking place, for example the notification in S310 of Figure 3, or if authentication data should be obtained or sent from storage on the network device 120. In an alternative, the software client on one device (for example, the second device 130) may be configured to communicate directly with another user device (such as the first device 110) in order to request and obtain authentication data.

Proximity between the user and the device may be determined according to any number of means. One possible implementation, as described at https://www.emeraldinno.com determines a proximity measure using Wi-Fi (RTM), which may be used to determine the proximity between the user and the device. This may be used as an indication that a user has moved away from a first device and has moved closer to a second device. Proximity may be determined using other signalling means, such as Bluetooth (RTM).

The examples described here may be of particular use in a Smart-Home setting, where multiple devices owned by the same user are connected to the same network device, or to different network devices within the same home network, and the user regularly changes the user device that they are using.

The aspects of the present disclosure described in all of the above may be implemented by software, hardware or a combination of software and hardware. The functionality of each of the first device 110, network device 120 and/or second device 130 may be implemented by software comprising computer readable code, which when executed on one or more processors of an electronic device, performs the functionality described above. The software may be stored on any suitable computer readable medium, for example a non-transitory computer-readable medium, such as read-only memory, random access memory, CD-ROMs, DVD (RTM)s, Blu-ray (RTM)s, magnetic tape, hard disk drives, solid state drives and optical drives. The computer-readable medium may be distributed over network-coupled computer systems so that the computer readable instructions are stored and executed in a distributed way.

Various modifications whether by way of addition, deletion, or substitution of features may be made to the above described examples to provide further examples, any and all of which are intended to be encompassed by the appended claims.

## Claims

1. A computer-implemented method performed in a system comprising a first device, a second device distinct from the first device and a network device distinct from both the first and second devices, the computer-implemented method comprising the network device:
receiving first authentication data that is based on one or more authentication readings obtained by the first device in a first authentication process performed by the first device when used by a user;
generating second authentication data based on the received first authentication data, the second authentication data being configured for use by the second device in a second authentication process to be performed whilst the user is using the second device, wherein:
the second authentication process is based on one or more authentication readings obtained by the second device, and
the one or more authentication readings obtained by the second device are selected, from a plurality of different types of authentication readings that the second device is capable of obtaining, in dependence on the second authentication data; and
outputting the second authentication data for sending to the second device.

2. A computer-implemented method performed in a system comprising a first device, a second device distinct from the first device and a network device distinct from both the first and second devices, the computer-implemented method comprising the second device:
receiving, from the network device, second authentication data that is based on first authentication data received by the network device, the first authentication data being based on one or more authentication readings obtained by the first device in a first authentication process performed by the first device when used by a user;
selecting and obtaining one or more authentication readings, from a plurality of different types of authentication readings that the second device is capable of obtaining, in dependence on the received second authentication data; and
performing a second authentication process whilst the user is using the second device, wherein the second authentication process is based on the one or more authentication readings obtained by the second device.

3. A computer-implemented method comprising:
a first device performing a first authentication process when used by a user, the first authentication process comprising obtaining one or more first authentication readings;
a network device, distinct from the first device, performing the computer-implemented method of claim 1; and
a second device, distinct from both the first device and the network device, performing the computer-implemented method of claim 2.

4. The computer-implemented method according to any of claims 1 to 3, wherein the one or more authentication readings obtained by the second device are selected in further dependence on one or more of:
a proximity between the first device and the second device;
a proximity between the user and the second device;
a location of the first device and/or a location of the second device; and
a time elapsed since the one or more authentication readings were obtained by the first device.

5. The computer-implemented method according to any of claims 1 to 4, wherein the second authentication data comprises a trust score indicative of a degree to which the user has been authenticated by the first device.

6. The computer-implemented method according to claim 5, wherein the second authentication data is generated further based on one or more of:
a proximity between the first device and the second device;
a proximity between the user and the second device;
a location of the first device and/or a location of the second device; and
a time elapsed since the one or more authentication readings were obtained by the first device.

7. The computer-implemented method according to any preceding claim, wherein the first authentication data comprises any one or more of:
the one or more authentication readings obtained by the first user device; and
a trust score indicative of a degree to which the user has been authenticated by the first device.

8. The computer-implemented method according to any preceding claim, wherein the first authentication process comprises a continuous authentication process and/or the second authentication process comprises a continuous authentication process.

9. The computer-implemented method according to any preceding claim, wherein at least one of the one or more authentication readings obtained by the first device is a biometric reading of the user; and/or
wherein at least one of the one or more authentication readings obtained by the second device is a biometric reading of the user.

10. A network device configured to perform the method according to claim 1, or any of claims 4 to 9 as dependent thereon.

11. A computer program configured, when executed on at least one processor of a network device, to cause the network device to perform the method according to claim 1, or any of claims 4 to 9 as dependent thereon.

12. A device configured to perform the method according to claim 2, or any of claims 4 to 9 as dependent thereon.

13. A computer program configured, when executed on at least one processor of a device, to cause the device to perform the method according to claim 2, or any of claims 4 to 9 as dependent thereon.

## Patentansprüche

1. Computerimplementiertes Verfahren, das in einem System durchgeführt wird, das eine erste Vorrichtung, eine zweite Vorrichtung, die von der ersten Vorrichtung verschieden ist, und eine Netzvorrichtung, die sowohl von der ersten als auch von der zweiten Vorrichtung verschieden ist, umfasst, wobei das computerimplementierte Verfahren umfasst, dass die Netzvorrichtung ausgelegt ist zum:
Empfangen erster Authentifizierungsdaten, die einen oder mehrere Authentifizierungsmesswerte als Grundlage verwenden, die durch die erste Vorrichtung in einem ersten Authentifizierungsprozess erhalten werden, der durch die erste Vorrichtung durchgeführt wird, wenn sie durch einen Anwender verwendet wird;
Erzeugen zweiter Authentifizierungsdaten auf der Grundlage der empfangenen ersten Authentifizierungsdaten, wobei die zweiten Authentifizierungsdaten zur Verwendung durch die zweite Vorrichtung in einem zweiten Authentifizierungsprozess konfiguriert sind, der durchgeführt werden soll, während der Anwender die zweite Vorrichtung verwendet, wobei der zweite Authentifizierungsprozess einen oder mehrere Authentifizierungsmesswerte als Grundlage verwendet, die durch die zweite Vorrichtung erhalten werden, und
der eine oder die mehreren Authentifizierungsmesswerte, die durch die zweite Vorrichtung erhalten werden, aus mehreren verschiedenen Typen von Authentifizierungsmesswerten, die die zweite Vorrichtung erhalten kann, in Abhängigkeit von den zweiten Authentifizierungsdaten gewählt werden; und
Ausgeben der zweiten Authentifizierungsdaten zum Senden zur zweiten Vorrichtung.

2. Computerimplementiertes Verfahren, das in einem System durchgeführt wird, das eine erste Vorrichtung, eine zweite Vorrichtung, die von der ersten Vorrichtung verschieden ist, und eine Netzvorrichtung, die sowohl von der ersten als auch von der zweiten Vorrichtung verschieden ist, umfasst, wobei das computerimplementierte Verfahren umfasst, dass die zweite Vorrichtung ausgelegt ist zum:
Empfangen von der Netzvorrichtung zweiter Authentifizierungsdaten, die erste Authentifizierungsdaten als Grundlage verwenden, die durch die Netzvorrichtung empfangen werden, wobei die ersten Authentifizierungsdaten einen oder mehrere Authentifizierungsmesswerte als Grundlage verwenden, die durch die erste Vorrichtung in einem ersten Authentifizierungsprozess erhalten werden, der durch die erste Vorrichtung durchgeführt wird, wenn sie durch einen Anwender verwendet wird;
Wählen und Erhalten eines oder mehrerer Authentifizierungsmesswerte aus mehreren verschiedenen Typen von Authentifizierungsmesswerten, die die zweite Vorrichtung erhalten kann, in Abhängigkeit von den empfangenen zweiten Authentifizierungsdaten; und
Durchführen eines zweiten Authentifizierungsprozesses, während der Anwender die zweite Vorrichtung verwendet, wobei der zweite Authentifizierungsprozess den einen oder die mehreren Authentifizierungsmesswerte als Grundlage verwendet, die durch die zweite Vorrichtung erhalten werden.

3. Computerimplementiertes Verfahren, das Folgendes umfasst:
eine erste Vorrichtung, die einen ersten Authentifizierungsprozess durchführt, wenn sie durch einen Anwender verwendet wird, wobei der erste Authentifizierungsprozess ein Erhalten eines oder mehrerer erster Authentifizierungsmesswerte umfasst;
eine Netzvorrichtung, die von der ersten Vorrichtung verschieden ist und das computerimplementierte Verfahren nach Anspruch 1 durchführt; und
eine zweite Vorrichtung, die von sowohl der ersten Vorrichtung als auch der Netzvorrichtung verschieden ist und das computerimplementierte Verfahren nach Anspruch 2 durchführt.

4. Computerimplementiertes Verfahren nach einem der Ansprüche 1 bis 3, wobei der eine oder die mehreren Authentifizierungsmesswerte, die durch die zweite Vorrichtung erhalten werden, ferner in Abhängigkeit von Folgendem gewählt werden:
einer Nähe zwischen der ersten Vorrichtung und der zweiten Vorrichtung und/oder
einer Nähe zwischen dem Anwender und der zweiten Vorrichtung und/oder
einem Ort der ersten Vorrichtung und/oder einem Ort der zweiten Vorrichtung und/oder
einer verstrichenen Zeit seit der eine oder die mehreren Authentifizierungsmesswerte durch die erste Vorrichtung erhalten wurden.

5. Computerimplementiertes Verfahren nach einem der Ansprüche 1 bis 4, wobei die zweiten Authentifizierungsdaten eine Vertrauenspunktzahl umfassen, die einen Grad angibt, zu dem der Anwender durch die erste Vorrichtung authentifiziert wurde.

6. Computerimplementiertes Verfahren nach Anspruch 5, wobei die zweiten Authentifizierungsdaten ferner auf der Grundlage von Folgendem erzeugt werden:
einer Nähe zwischen der ersten Vorrichtung und der zweiten Vorrichtung und/oder
einer Nähe zwischen dem Anwender und der zweiten Vorrichtung und/oder
einem Ort der ersten Vorrichtung und/oder einem Ort der zweiten Vorrichtung und/oder
einer verstrichenen Zeit seit der eine oder die mehreren Authentifizierungsmesswerte durch die erste Vorrichtung erhalten wurden.

7. Computerimplementiertes Verfahren nach einem vorhergehenden Anspruch, wobei die ersten Authentifizierungsdaten Folgendes umfassen:
den einen oder die mehreren Authentifizierungsmesswerte, die durch das erste Anwendergerät erhalten wurden; und/oder
eine Vertrauenspunktzahl, die einen Grad angibt, zu dem der Anwender durch die erste Vorrichtung authentifiziert wurde.

8. Computerimplementiertes Verfahren nach einem vorhergehenden Anspruch, wobei der erste Authentifizierungsprozess einen kontinuierlichen Authentifizierungsprozess umfasst und/oder der zweite Authentifizierungsprozess einen kontinuierlichen Authentifizierungsprozess umfasst.

9. Computerimplementiertes Verfahren nach einem vorhergehenden Anspruch, wobei mindestens einer des einen oder der mehreren Authentifizierungsmesswerte, die durch die erste Vorrichtung erhalten werden, ein biometrischer Messwert des Anwenders ist und/oder
mindestens einer des einen oder der mehreren Authentifizierungsmesswerte, die durch die zweite Vorrichtung erhalten werden, ein biometrischer Messwert des Anwenders ist.

10. Netzvorrichtung, die konfiguriert ist, das Verfahren nach Anspruch 1 oder einem der Ansprüche 4 bis 9, wenn von ihm abhängig, durchzuführen.

11. Computerprogramm, das konfiguriert ist, wenn es in mindestens einem Prozessor einer Netzvorrichtung ausgeführt wird, zu bewirken, dass die Netzvorrichtung das Verfahren nach Anspruch 1 oder einem der Ansprüche 4 bis 9, wenn von ihm abhängig, durchführt.

12. Vorrichtung, die konfiguriert ist, das Verfahren nach Anspruch 2 oder einem der Ansprüche 4 bis 9, wenn von ihm abhängig, durchzuführen.

13. Computerprogramm, das konfiguriert ist, wenn es in mindestens einem Prozessor einer Vorrichtung ausgeführt wird, zu bewirken, dass die Vorrichtung das Verfahren nach Anspruch 2 oder einem der Ansprüche 4 bis 9, wenn von ihm abhängig, durchführt.

## Revendications

1. Procédé mis en œuvre par ordinateur réalisé dans un système comprenant un premier dispositif, un second dispositif distinct du premier dispositif et un dispositif de réseau distinct à la fois du premier et du second dispositif, le procédé mis en œuvre par ordinateur comprenant le dispositif de réseau :
recevant des premières données d'authentification qui sont basées sur une ou plusieurs lectures d'authentification obtenues par le premier dispositif dans un premier processus d'authentification réalisé par le premier dispositif lorsqu'il est utilisé par un utilisateur ;
générant des secondes données d'authentification basées sur les premières données d'authentification reçues, les secondes données d'authentification étant configurées pour être utilisées par le second dispositif dans un second processus d'authentification à réaliser pendant que l'utilisateur utilise le second dispositif,
le second processus d'authentification étant basé sur une ou plusieurs lectures d'authentification obtenues par le second dispositif, et
la ou les lectures d'authentification obtenues par le second dispositif étant sélectionnées, parmi une pluralité de différents types de lectures d'authentification que le second dispositif est capable d'obtenir, en fonction des secondes données d'authentification ; et
émettant des secondes données d'authentification en vue de leur envoi au second dispositif.

2. Procédé mis en œuvre par ordinateur réalisé dans un système comprenant un premier dispositif, un second dispositif distinct du premier dispositif et un dispositif de réseau distinct à la fois du premier et du second dispositif, le procédé mis en œuvre par ordinateur comprenant le second dispositif :
recevant, en provenance du dispositif de réseau, des secondes données d'authentification qui sont basées sur les premières données d'authentification reçues par le dispositif de réseau, les premières données d'authentification étant basées sur une ou plusieurs lectures d'authentification obtenues par le premier dispositif dans un premier processus d'authentification réalisé par le premier dispositif lorsqu'il est utilisé par un utilisateur ;
sélectionnant et obtenant une ou plusieurs lectures d'authentification, parmi une pluralité de différents types de lectures d'authentification que le second dispositif est capable d'obtenir, en fonction des secondes données d'authentification reçues ; et
réalisant un second processus d'authentification pendant que l'utilisateur utilise le second dispositif, le second processus d'authentification étant basé sur la ou les lectures d'authentification obtenues par le second dispositif.

3. Procédé mis en œuvre par ordinateur comprenant les étapes suivantes :
un premier dispositif réalisant un premier processus d'authentification lorsqu'il est utilisé par un utilisateur, le premier processus d'authentification comprenant l'obtention d'une ou plusieurs premières lectures d'authentification ;
un dispositif de réseau, distinct du premier dispositif, réalisant le procédé mis en œuvre par ordinateur selon la revendication 1 ; et
un second dispositif, distinct à la fois du premier dispositif et du dispositif réseau, réalisant le procédé mis en œuvre par ordinateur selon la revendication 2.

4. Procédé mis en œuvre par ordinateur selon l'une quelconque des revendications 1 à 3, la ou les lectures d'authentification obtenues par le second dispositif étant sélectionnées en fonction d'un ou plusieurs des éléments suivants :
une proximité entre le premier dispositif et le second dispositif ;
une proximité entre l'utilisateur et le second dispositif ;
un emplacement du premier dispositif et/ou un emplacement du second dispositif ; et
un temps écoulé depuis que la ou les lectures d'authentification ont été obtenues par le premier dispositif.

5. Procédé mis en œuvre par ordinateur selon l'une quelconque des revendications 1 à 4, les secondes données d'authentification comprenant un score de confiance indicatif d'un degré d'authentification de l'utilisateur par le premier dispositif.

6. Procédé mis en œuvre par ordinateur selon la revendication 5, les secondes données d'authentification étant générées en outre en fonction d'un ou plusieurs éléments parmi :
une proximité entre le premier dispositif et le second dispositif ;
une proximité entre l'utilisateur et le second dispositif ;
un emplacement du premier dispositif et/ou un emplacement du second dispositif ; et
un temps écoulé depuis que la ou les lectures d'authentification ont été obtenues par le premier dispositif.

7. Procédé mis en œuvre par ordinateur selon n'importe quelle revendication précédente, les premières données d'authentification comprenant une ou plusieurs quelconques de :
la ou les lectures d'authentification obtenues par le premier dispositif d'utilisateur ; et
un score de confiance indiquant un degré d'authentification de l'utilisateur par le premier dispositif.

8. Procédé mis en œuvre par ordinateur selon n'importe quelle revendication précédente, le premier processus d'authentification comprenant un processus d'authentification continu et/ou le second processus d'authentification comprenant un processus d'authentification continu.

9. Procédé mis en œuvre par ordinateur selon n'importe quelle revendication précédente, au moins une de la ou des lectures d'authentification obtenues par le premier dispositif étant une lecture biométrique de l'utilisateur ; et/ou
au moins une de la ou des lectures d'authentification obtenues par le second dispositif étant une lecture biométrique de l'utilisateur.

10. Dispositif de réseau configuré pour réaliser le procédé selon la revendication 1, ou l'une quelconque des revendications 4 à 9 comme en dépendant.

11. Programme informatique configuré, lorsqu'il est exécuté sur au moins un processeur d'un dispositif de réseau, pour amener le dispositif de réseau à réaliser le procédé selon la revendication 1, ou l'une quelconque des revendications 4 à 9 qui en dépendent.

12. Dispositif configuré pour réaliser le procédé selon la revendication 2, ou selon l'une quelconque des revendications 4 à 9 qui en dépendent.

13. Programme informatique configuré, lorsqu'il est exécuté sur au moins un processeur d'un dispositif, pour amener le dispositif à réaliser le procédé selon la revendication 2, ou selon l'une quelconque des revendications 4 à 9 qui en dépendent.
